# EUROPEAN PATENT SPECIFICATION

(11) **EP 4 172 113 B1**
(45) Date of publication and mention of the grant of the patent: **28.01.2026**
(21) Application number: 21739413.9
(22) Date of filing: 29.06.2021
(51) Int. Cl.: C02F 3/00, C02F 1/52, C02F 3/30

(54) **A CONTROL SYSTEM OF A WASTEWATER TREATMENT PLANT**
STEUERSYSTEM EINER ABWASSERBEHANDLUNGSANLAGE
SYSTÈME DE COMMANDE D'UNE INSTALLATION DE TRAITEMENT DES EAUX USÉES

(30) Priority: 29.06.2020 FI 20205693
(43) Date of publication of application: 03.05.2023
(73) Proprietor: Kemira OYJ, Helsinki 00180 (FI)
(72) Inventor: HANSEN, Bengt, 25109 Helsingborg (SE); GRÖNFORS, Outi, 02270 Espoo (FI); HALTTUNEN, Sakari, 02270 Espoo (FI); RUOTSALAINEN, Jussi, 02270 Espoo (FI)
(74) Representative: Berggren Oy
(86) International application number: PCT/FI2021/050501
(87) International publication number: WO 2022/003247

(56) References cited:
- KR-B1- 102 020 743
- US-B1- 9 580 341
- DATABASE COMPENDEX [online] ENGINEERING INFORMATION, INC., NEW YORK, NY, US; 2004, MELS A R ET AL: "Turbidity-based monitoring of particle concentrations and flocculant requirement in wastewater pre-treatment", Database accession no. E2005058810412
- MELS A R ET AL: "Turbidity-based monitoring of particle concentrations and flocculant requirement in wastewater pre-treatment", WATER SCIENCE AND TECHNOLOGY 2004 IWA PUBLISHING GBR, vol. 50, no. 11, 2004, pages 173 - 178, XP009529381, DOI: 10.2166/WST.2004.0685
- A.R. MELS. H. SPANJERS AND A. KLAPWIJK: "Turbidity-based monitoring of particle concentrations and flocculant requirement in wastewater pre-treatment", WATER SCIENCE AND TECHNOLOGY, vol. 50, no. 11, 1 December 2004 (2004-12-01), pages 173 - 178, XP009529381, DOI: 10.2166/wst.2004.0685

## Description

### Field of technology

The invention relates to a control system for a wastewater treatment plant.

### Prior art

Wastewater treatment plants are used to purify municipal sewage and/or industrial wastewater. The implementation of the treatment plant depends on the size of community and quality of the wastewater to be treated and the quality requirements of the treated water. Industrial wastewater can be treated in a separate industrial wastewater treatment plant or directed into a municipal wastewater plant, potentially pre-treated if required by an environmental permit, for example. It is possible that rainwater is also directed into sewage, which affect to the quality of the wastewater pumped to the wastewater treatment plant.

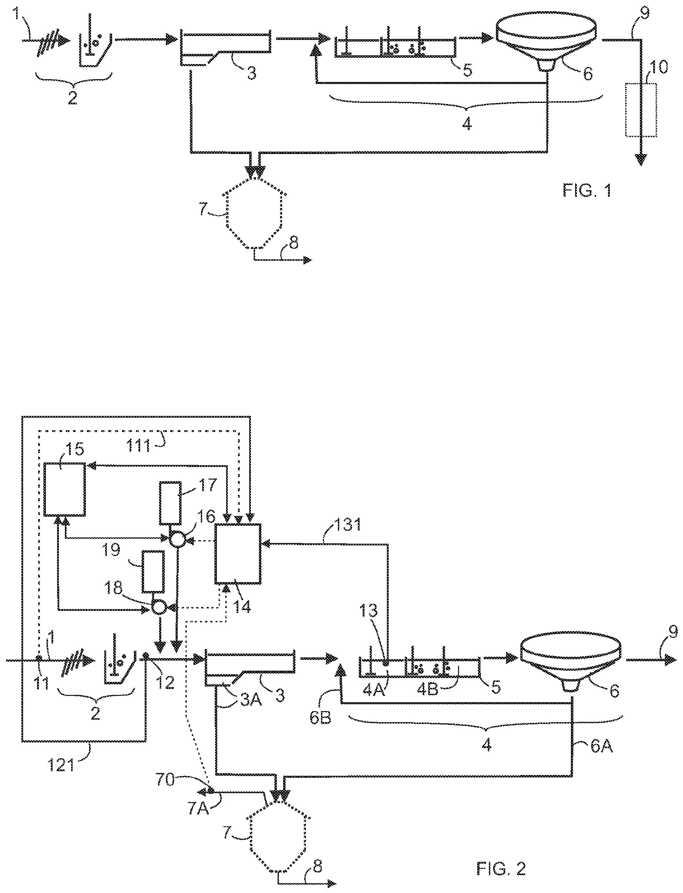

Figure 1 illustrates a simple example of a known wastewater treatment plant. The wastewater 1 flows first to a mechanical preliminary treatment 2 where different objects are removed from the wastewater. Larger objects are removed by using coarse screens. Smaller objects like matches etc. are removed by fine screens. Some other wastewater treatment plants may have only one screen. The preliminary treatment has usually at least one chamber to remove gravel/grit. There can be separate chambers to remove gravel and grit. The removed objects, gravel and grit cannot be reused because of their high contamination.

After the preliminary treatment, the wastewater flows into a primary treatment tank/s 3, called also a primary treatment process. The primary treatment is normally based on sedimentation of particles in the wastewater. The sedimentation forms sludge on the bottom of the tank/s, this is called primary sludge and is separated from the tanks/s for further processing. The secondary treatment process 4 is based on biological processes 5. It uses bacteria which consume contaminants, in particular biodegradable organics, carbon and phosphorus and some nitrogen. Biomass with organic and/or inorganic residue forms sludge. In order that the biological process runs properly the sludge (and bacteria) is pumped to a secondary sedimentation tank 6, which is part of the biological process. The sludge settles on the bottom of the secondary sedimentation tank 6.

A major part of the sludge is pumped back to the biological processes. The rest of the sludge, the excess sludge, as well as the primary sludge are transported to further processing like thickening, anaerobic digestion 7 and sludge dewatering wherein biogas is produced. The anaerobic digester can be at the wastewater treatment plant or at another location. The digested and dewatered sludge 8 can be transported to the end use such as composting, incineration or to be used in agriculture. The effluent from the secondary sedimentation tank/s 6 is usually clean enough to be released to the recipient, but there can be an additional process or processes 10 to further purify the treated water. The additional process can, for example, be a disinfection process using chlorine, ozone, peroxides, performic acid, or UV (ultraviolet light).

In order to control the processes of the wastewater treatment plant there are some on-line measurement like influent waste water flow, oxygen content in aeration zone/s in the biological processes, and mixed liquor suspended solids (MLSS), which is the concentration of suspended solids in the typical aeration zone/s, more precisely the concentration of activated sludge. However biological treatment may also be made without the aeration zone/s. There can be other on-line measurements as well. The on-line measurements are used for monitoring, the monitored values are mainly used for changing operational parameters manually or semiautomatic. Just few parameters, the said oxygen content and the excess sludge from the biological processes for keeping the MLSS even, are normally controlled automatically. A.R. MELS. et al ("Turbidity-based monitoring of particle concentrations and flocculant requirement in wastewater pre-treatment", WATER SCIENCE AND TECHNOLOGY, vol. 50, no. 11, 1 December 2004, pages 173-178) discloses an example of a control system of the prior art for a wastewater treatment plant.

### Short description

The object of the invention is to improve the operation of the wastewater treatment plant. The object is achieved in a way described in the independent claim.

Dependent claims illustrate different embodiments of the invention. The invention is based on an idea that a control system according to the invention can be built using different measurement units and control units. What units are used for building the control system depends on the wastewater treatment plant. This kind of system structure makes it possible to construct a control system that suits for a specific wastewater treatment plant. In other words, the invention makes it possible to build a control system for different wastewater treatment plants, in such a way that the wastewater plant operates more efficiently.

An inventive control system for a wastewater treatment plant is for the wastewater treatment plant comprising at least a primary treatment process 3 and a secondary treatment process 4. The plant may comprise other processes as well. The control system comprises, a measuring unit 12 that is arranged to measure turbidity or suspended solids of the wastewater before the primary treatment process 3 or in the primary treatment process 3, and a second measuring unit 13 that is arranged to measure a nitrate level or a redox value in a denitrification zone of the secondary treatment process 4.

The control system comprises also a control unit 14 that is arranged to receive measurements from the measuring unit 12 and the second measuring unit 13. The control unit is also arranged to form control signals for dosing at least one chemical prior to the primary treatment or into an influent of the primary treatment process 3 or into the primary treatment process 3 based on the measurements from the measuring unit 12. The control unit is further arranged to adjust said dosing based on the measurements from the second measuring unit 13.

### List of figures

In the following, the invention is described in more detail by reference to the enclosed drawings, where
- Figure 1: illustrates an example of a known wastewater treatment plant,
- Figure 2: illustrates an example of an inventive control system,
- Figure 3: illustrates an example of a control unit in the system of figure 2,
- Figure 4: illustrates another example of the inventive control system,
- Figure 5: illustrates an example of a control unit in the system of figure 4,
- Figure 6: illustrates yet another example of the inventive control system,
- Figure 7: illustrates an example of a control unit in the system of figure 6,

### Description of the invention

Figure 2 illustrates an example of a control system according to the invention. An inventive control system is for a wastewater treatment plant comprising at least a primary treatment process 3 and a secondary treatment process 4. The plant may comprise other processes as well. Figure 2 shows also a mechanical preliminary treatment 2 as illustrated also in figure 1.

The control system comprises a measuring unit 12 that is arranged to measure turbidity or suspended solids of the wastewater before the primary treatment process 3 or in the primary treatment process 3, and a second measuring unit 13 that is arranged to measure a nitrate level or a redox value in an denitrification zone 4A of the secondary treatment process 4. In addition, the control system may also comprise a flow meter 11 that is arranged to measure a wastewater flow 1 into the wastewater treatment plant.

The control system comprises also a control unit 14 that is arranged to receive measurements from the measuring unit 12 and the second measuring unit 13. The control unit is also arranged to form control signals for dosing at least one chemical prior to the primary treatment 3 or into an influent of the primary treatment process 3 or into the primary treatment process 3 based the measuring unit 12. The control unit is further arranged to adjust said dosing based on the measurements from the second measuring unit 13. The control unit 14 may also be arranged to receive measurements from the flow meter 11 for using when forming control signals for dosing at least one chemical prior to the primary treatment 3 or into an influent of the primary treatment process 3 or into the primary treatment process 3. The dosing location of at least one chemical prior to the primary treatment 3 or into an influent of the primary treatment process 3 can be before the preliminary treatment 2 or just before the end of the influent channel/pipe to the primary treatment process 3, or in the beginning of the primary treatment process 3, or any suitable location between before the preliminary treatment 2 and the beginning of the primary treatment process 3. And as said, the dosing can also be made into the primary treatment process 3.

The control unit 14 can be a separate unit from a plant's monitoring/control system 15 as can be seen in figure 2. The separate unit can even be completely independent from the plant's monitoring/control system 15, if all sensors and dosing devices are directly in contact with the control unit 14. This applies to other embodiments like those in figures 2, 4 and 6. However, the control unit can also be combined into the plant's monitoring/control system as an alternative implementation. So, the control unit 14 may be in a server at another location, in which case it can be implemented as a cloud service, and communication to the plant (in order to receive measurement data and transmit control related signals) can be arranged through a communication network/s like wireless networks and/or fixed network/s.

In the invention at least one chemical is dosed prior to the primary treatment 3 or into the influent of the primary sedimentation tank/s 3 or into the primary sedimentation tank/s 3. So, there is at least one chemical tank/storage 17, 19 and a dosing device 16, 18 for feeding the chemical from the tank/storage into the influent of the primary sedimentation tank/s 3, or directly into the primary sedimentation tank/s. The embodiment of figure 2 shows two chemical tanks and dosing devices. By using one or two chemicals a proper wastewater treatment can be achieved in many cases, but further chemicals may also be used if needed or preferred.

Although in this description different embodiments of the invention are illustrated mostly using one or two chemicals, like one or more coagulant/s, and/or one or more polymer/s, or any combination of them, optionally together with another chemical, (for example acid or base for controlling pH), more chemicals can also be used. For example, 1 - 5 chemicals or even more chemicals may be used. There can be none, one or more coagulants and/or none, one or more polymers. The chemicals can be organic or inorganic.

A suitable dosing device, such as a pump, can be used to feed one or more chemicals prior to the primary treatment 3 or into the influent of the primary treatment 3 or directly into the primary treatment 3. Therefore, the wastewater treatment plant has at least one dosing device for feeding the chemical/s.

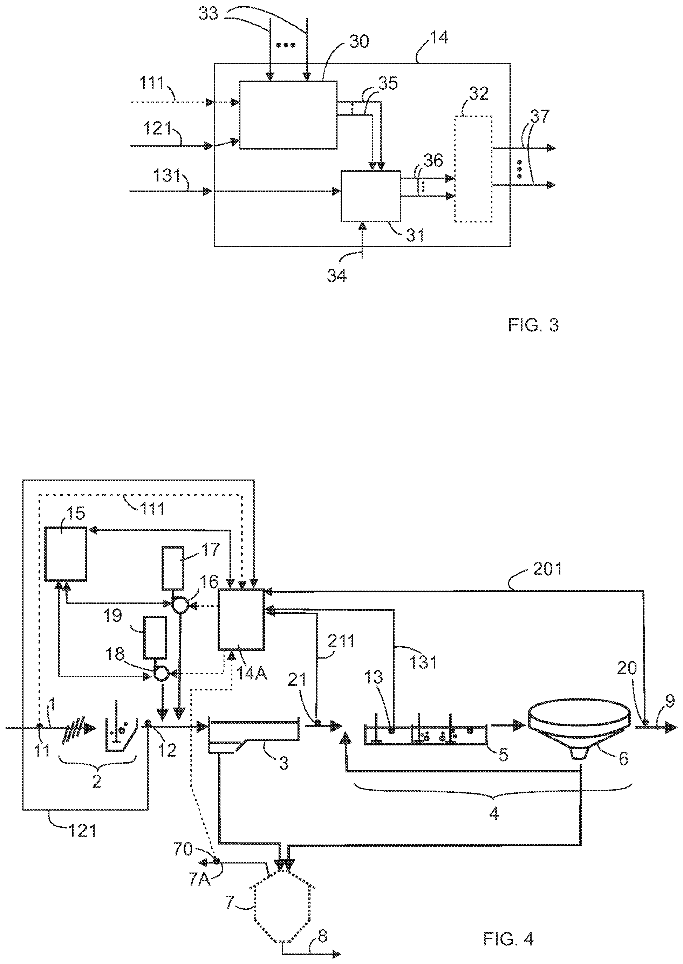

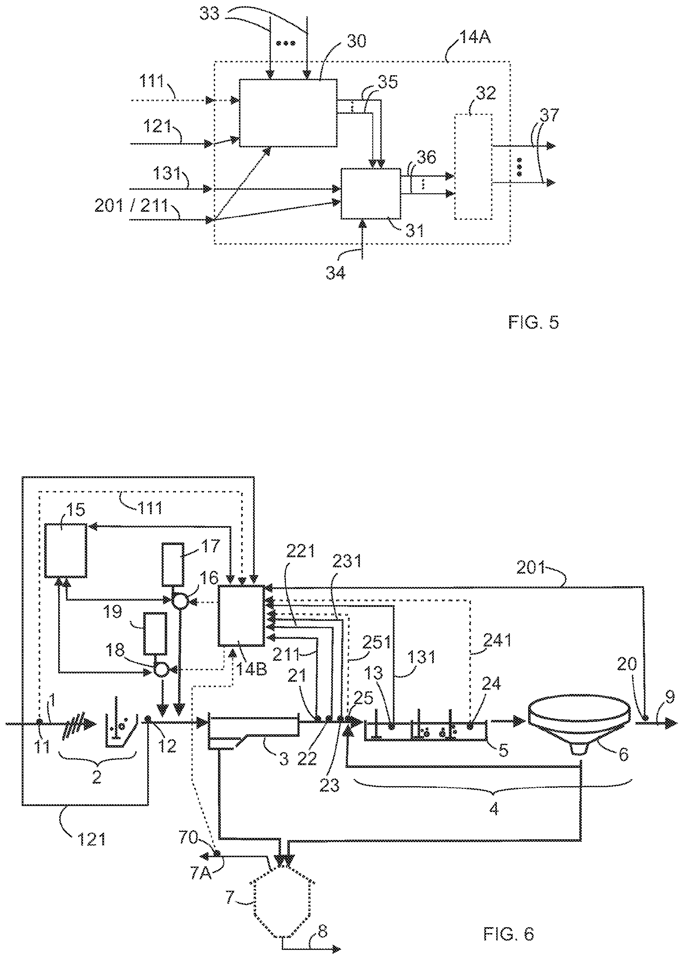

The chemical used can be inorganic coagulant, which normally consists of Al or Fe salts. These salts coagulate small particles, so they settle easily in the primary treatment and therefore removal of solid material in the wastewater, more specifically suspended solids concentration, is improved. This has an effect that more primary sludge 3A can be removed from the bottom of the primary sedimentation tank/s 3. The more primary sludge is produced the more material is supplied to the anaerobic digester 7, where biogas 7A is produced. In other words, the wastewater treatment plant can produce more biogas and thus runs more efficiently when having the inventive control system. The primary sludge 3A has high energy content so it is good material for producing biogas. As can be seen, there can also be a sensor 70 to measure biogas production. The control unit 14 (14A, 14B in the embodiments of figures 4 and 6) may be connected to this sensor 70 for utilizing this data as well with the other measurements.

Inorganic coagulants also precipitate dissolved phosphorus (mainly in the form of phosphates). Typically, the higher the dosage is the better the removal of the phosphate is a. However, it is not preferred to overdosage, because it may disturb the secondary process.

In a few cases an organic coagulant is used. The organic coagulant consists of polymeric substances like polyamine, poly-DADMAC, chitosan, etc. When these are used, no dissolved phosphate removal occurs.

The chemical used can also be polymer (like polyamine, poly-DADMAC, chitosan, which can be coagulants as well). Further, polyacrylamides, mannich, starch-based and other polymers can be used. The polymer may have a cationic or anionic charge, or it may be non-charged. The purpose of using the polymers is to agglomerate particles to larger particles so that they are easier to separate. The separation occurs in the primary treatment process 3. So, the use of the polymer improves also the production of the primary sludge 3A, which means that more biogas 7A can be produced.

Any combination of one or more coagulant/s and/or one or more polymer/s, optionally together with another chemical can be used. The other chemical may include, but is not limited to, acids, bases, carbonate salts, nutrients (phosphorus, nitrogen) and carbon source. The chemical/s used depends of the need of the wastewater treatment plant. In the invention a combination of coagulant and polymer are used efficiently, which is considered to give very good possibilities to reach optimal treatment results. In an embodiment shown in figure 2 the dosing device 16 and the tank 17 may be for polymer, and the dosing device 18 and the tank 19 for coagulant. In another embodiment, similar dosing devices and tanks/storages can be used for other combination of chemicals. So, the chemical/s used improve the sedimentation in the primary treatment 3 and thus form more primary sludge 3A, which in turn can produce more biogas 7A in the digester 7. Regarding to the functioning of the secondary treatment 4 it is beneficial to remove the primary sludge 3A as much as possible. The effluent wastewater of the primary treatment still contains nutrients for the biological treatment of the secondary process 4.

After primary treatment the wastewater is treated in a biological treatment (secondary treatment). The secondary treatment 4 comprises a denitrification zone 4A and an aeration zone 4B, or a number of the denitrification zones and aeration zones. The figures of this description are schematic drawings and illustrate an activated sludge process. However other biological processes can be used for the secondary treatment.

Denitrification is the process wherein nitrates are reduced to gaseous nitrogen. Denitrification is based on the ability of denitrification bacteria to reduce nitrogen in nitrate form into free nitrogen gas, releasing the nitrogen gas into the atmosphere. In the aerated zones 4B of the activated sludge process, the ammonium nitrogen contained in the wastewater is oxidised into nitrate NO₃ (in more detail the wastewater is oxidised into nitrite and then further oxidized to nitrate), which is reduced into nitrogen gas N₂ in the denitrification zones. In other words, the aeration zones are nitrification zones where normally most nitrogen in an ammonium form, NH4+, is transferred to nitrate, NO3-, by nitrifying bacteria (nitrification). The aeration zones also degrade biological degradable matter. This is done before the nitrification occurs. In some cases the nitrification is limited to nitrite, NO2-, that is then denitrified to N2 by denitrifying bacteria or by bacteria that reacts with both nitrite and ammonium to form nitrogen gas and biomass. In the secondary treatment nitrogen is removed and also BOD/COD ratio is decreased. BOD is Biological Oxygen Demand and COD is Chemical Oxygen Demand. The decreased BOD/COD ratio can be used as an indicator to the treated water. The biological process 4 can also remove phosphates with polyphosphate accumulating bacteria. The biological process 4 can be an activated sludge process (AS) or a Moving Bed BioReactor (MBBR), trickling filter or a Membrane Bio Reactor (MBR) or a combination of those. Most common are AS and MBBR.

The wastewater is arranged to flow from the biological treatment (the denitrification zones 4A, and the nitrification zones 4B) to the secondary sedimentation tank/s 6, which is part of the biological process. The sludge settles on the bottom of the secondary sedimentation tank/s 6. In this way biomass (containing alive and dead bacteria and organic and/or inorganic residue) are removed from the secondary treatment. A major part of the sludge is pumped back to the biological processes for activating it. The rest of the sludge, i.e. the excess sludge, is transported to further process like an anaerobic digester 7 wherein biogas is produced. The effluent from the secondary sedimentation tank/s 6 is usually clean enough to be released to the recipient, but there can be an additional process or processes as illustrated in figure 1.

Figure 3 shows the control unit 14. The control unit 14 is arranged to receive measurements 121, 131 from the measuring unit 12 and the second measuring unit 13. The control unit is also arranged to form control signals 37 for dosing at least one chemical prior to the primary treatment 3 or into an influent of the primary treatment process 3 or into the primary treatment process 3 based on the measurements from the measuring unit 12. The control unit is further arranged to adjust said dosing based on the measurements from the second measuring unit 13. As said the measuring unit 12 is arranged to measure turbidity or suspended solids of the wastewater before the primary treatment process, and a second measuring unit 13 is arranged to measure the nitrate level or the redox value in a denitrification zone of the secondary treatment process. The redox is an electrical measurement that shows the tendency of a chemicals to acquire electrons or lose electrons. The chemical is oxidised when losing the electrons. When acquiring the electrons the chemical is reduced. In addition, the control unit 14 may also be arranged to receive measurements 111 from the flow meter 11, in which case the control unit is also arranged to form control signals 37 for dosing at least one chemical prior to the primary treatment 3 or into an influent of the primary treatment process 3 or into the primary treatment process 3 utilizing also the measurements from the flow meter 11.

The functions of the control unit 14 can be formed in several subunits. Figure 3 shows an example where at least two or three subunits are used, namely a primary control unit 30, an adjusting control unit 31 and possibly a signal conversion unit 32. The embodiment of figure 3 can be used in the system of figure 2. The primary control unit is arranged to receive or have initial setting values 33 for the chemical dosage/s like for one or more coagulant/s, and/or one or more polymer/s, or any combination of them, optionally together with another chemical. There can be other initial setting values to other parameters as well, like turbidity, suspended solids, nitrate or redox.

The primary control unit 30 forms a control signal/s 35 in order to keep the chemical dosing at the setting value. Since the wastewater flow and the quality of the wastewater vary the setting value follows the measurement 111 and 121, and therefore the setting value is arranged to change in order to represent a correct chemical/s dosing/s for a current wastewater condition.

The target of the control system 14 of figure 3 is to reduce as much suspended solids as possible in primary process but not too much. So, load of organic matter to the biological process 4 is controlled.

An indication if too much is removed is given by the second measuring unit 13, which measures the nitrate level or the redox value. The adjusting control unit 31 is arranged to take care of the measurements 131 from the second measuring unit. The adjusting control unit 31 is arranged to receive or have an initial setting value for the nitrate level or the redox value 34, and also arranged to receive the control signal/s 35. The adjusting control unit 31 adjusts the control signal/s 35 utilizing the measurements of the nitrate level or the redox value, and form an adjusted control signal/s 36.

If nitrate level is too high, the adjustment increases the value of the control signal/s 35 for higher dosage of chemical/s, and forms the adjusted control signal/s 36. If nitrate level is too low, the adjustment decreases the value of the control signal/s 35 for lower dosage of chemical/s, and forms the adjusted control signal/s 36. Redox potential is a cheap and indirect reading value of the denitrification process and nitrate level. If redox drops, less nitrate is present and the dosage is decreased and vice versa. The control unit 14 can be arranged to dose at least two chemicals. In certain embodiments, dosing of the at least two chemicals is independent from each other. These two chemicals can be one or more coagulant/s and/or one or more polymer/s, or any combination of them, optionally together with another chemical.

Since the adjusted control signal/s 36 may be in a form, which is not suitable for the dosing device/s 16, 18 the control unit 14 may have a signal conversion unit 32 for converting the adjusted control signal/s 36 to a suitable form, which is the final control signal/s 37 for thedosing devices. Alternatively, the functions of the signal conversion unit 32 may be arranged to be performed in the plant monitoring/control system 15.

Figure 4 shows another example of the inventive control system. Phosphorus level after the primary treatment and/or secondary treatment can also be controlled. In addition to the measurement units shown in figure 2, the system of figure 4 further comprises a third measuring unit 20, 21 that is arranged to measure a phosphorus level in an effluent of the secondary treatment process 4, or in an effluent of the primary treatment process 3. So, the third measuring unit 20, 21 is a phosphorus measuring device 20, 21. There can also be two phosphorus measuring devices situated as said above. The measurement device/s can measure dissolved or total phosphorous.

The control unit 14A is further arranged to receive measurements from the third measuring unit 20, 21, and use these measurements when forming control signals for dosing at least one chemical prior to the primary treatment 3 or into an influent of the primary treatment process 3 or into the primary treatment process 3. Figure 5 illustrates the control 14A, which is used in the system of figure 4.

The control unit 14A can be arranged to dose one or more coagulant/s and/or one or more polymer/s, optionally together with another chemical. The polymer dosing can utilize the measurements from the measuring unit 12 and/or from the second measurement unit 13. The coagulant dosing can utilize the measurements from the measuring unit 12 and/or from the second measuring unit 13 and/or from the third measuring unit 20, 21.The control unit can be further arranged to set threshold values for maximum and minimum dosage/s based on phosphorus level in an effluent of the secondary treatment process. The maximum and minimum dosage/s can relate to coagulant or polymer or both. In addition, the control unit 14A may also be arranged to dose at least two chemicals, the two chemicals like one or more coagulant/s and/or one or more polymer/s, optionally together with another chemical utilizing also the measurements from the flow meter 11.

Figure 6 shows another example of the inventive control system. In this example the load to the biological treatment is more accurately controlled by measuring and analyzing the wastewater entering the biological treatment 4 more accurately. The system according to figure 6 ensures that a well-balanced wastewater enters the biological treatment. Well-balanced water means water that has suitable ratio between TOC/COD/BOD, nitrogen and phosphorus, so that there will be no deficiency or excess of any of these substances in the biological treatment.

In addition to the measurements units shown in figure 4, the system of figure 6 further comprises a fourth measuring unit 22 that is arranged to measure a suspended solid or turbidity level in an effluent of the primary treatment process 3, or a fifth measuring unit 23 that is arranged to measure COD, BOD or TOC (Total Organic Carbon) values in an effluent of the primary treatment process 3, or the both fourth measuring unit 22 and fifth measuring unit 23.

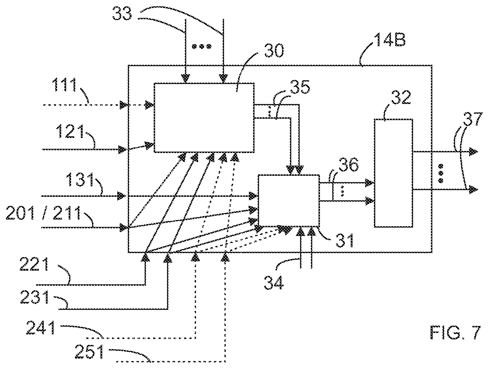

The control unit 14B is further arranged to receive measurements 221, 231 from fourth measuring unit 22 or the fifth measuring unit 23, or the both fourth measuring unit 22 and fifth measuring unit 23. The control unit is also arranged to use these measurements when forming control signals for dosing at least one chemical prior to the primary treatment 3 or into an influent of the primary treatment process 3 or into the primary treatment process 3 and for adjusting said dosing. Figure 7 shows an embodiment of the control unit 14B, which is used in the system of figure 6.

The control unit 14B is arranged to provide enough carbon for the denitrification. Therefore, the TOC or COD or BOD value/level, nitrogen value/level and phosphorus value/level of the measurements are arranged to be kept within ranges, which are preferred in order that the processes work properly. The control unit 14B can be arranged to dose one or more coagulant/s and/or one or more polymer/s, optionally together with another chemical. The polymer dosing can utilize the measurements from the measuring unit 12 and/or from the second measurement unit 13 and/or from the fourth measuring unit 22 and/or from the fifth measuring unit 23. The coagulant dosing can utilize the measurements from the measuring unit 12 and/or from the second measuring unit 13 and/or from the third measuring unit 20, 21 and/or from the fourth measuring unit 22 and/or from the fifth measuring unit 23.

There are also other inventive embodiments. As can be noted, the invention makes it possible to construct a control system for a great number of different wastewater treatment plants. Inventive embodiments produce more primary sludge, which means that secondary process is more stable and thus runs more efficiently. More biogas can be produced because of the increased amount of the primary sludge.

For example, in addition to the units mentioned above the inventive control may further comprise a sixth measuring unit 25 that is arranged to measure an ammonium nitrogen level in an effluent of the primary treatment process, and the control unit 14A, 14B is further arranged to receive measurements 251 from the sixth measuring unit 25. The control unit is also arranged to use these measurements when forming control signals for dosing at least one chemical prior to the primary treatment 3 or into an influent of the primary treatment process 3 or into the primary treatment process 3 and for adjusting said dosing.

An inventive control system may further comprise a seventh measuring unit 24 that is arranged to measure a ammonium level in an aeration zone of the secondary treatment process and the control unit 14A, 14B is further arranged to receive measurements 241 from the seventh measuring unit 24, and also arranged to use these measurements when forming control signals for dosing at least one chemical prior to the primary treatment 3 or into an influent of the primary treatment process 3 or into the primary treatment process 3 and for adjusting said dosing.

The control unit 14, 14A, 14B may further comprise at least one further measuring unit, and the control unit 14A is further arranged to receive measurements from at least one further measuring unit, and also arranged to use these measurements when forming control signals for dosing at least one chemical prior to the primary treatment 3 or into an influent of the primary treatment process 3 or into the primary treatment process 3 and for adjusting said dosing.

Relating to different measurements of the sensors it is worth to mention that all measurements indicated in this description can be used in any combination or even alone to dose coagulant/s or adjusting the dosing of coagulant/s, and all measurements, except the measurements 20 and 21, in this description can be used in any combination or even alone to dose polymer/s or adjusting the dosing of polymer/s. The examples of this description show only some possible embodiments.

The dosage/s of the chemical/s like coagulant or polymer can be determined by the result of the treatment (measurements). The dosage/s of the chemical/s like coagulant or polymer may also be determined by amount of the chemical per cubic meter, or amount of the chemical per mass unit of impurities instead. The measuring units and meters are on-line measurement devices. To verify the energy savings and increased biogas production it is also possible to follow energy consumption of the blowing machines and/or airflow to the secondary treatment and the biogas flow. Biogas production can also be monitored using another suitable measuring device. The MLSS content is also useful to be followed up because the inventive control system may reduce the excess sludge production and in order that the sludge age will not increase unnecessary much.

Figures 3, 5 and 7 show some embodiments how the inventive control unit can be performed. The primary control unit 30 provides the control signal/s 35, which can be adjusted by the adjusting control unit. The adjustment happens if needed. However, the primary control unit and the adjusting control may also be a single unit, in which case all functions or the primary control unit 30, and the adjusting control unit 31 are made in the same unit. The control signal/s (adjusted or not) can be output of the control unit 14, 14A, 14B if there is not the conversion unit 32. The output control signal/s can be in converted forms as well when using the conversion unit.

Any suitable control algorithms can be used for calculating dosage/s for chemical/s and also to adjust the calculated dosage/s. The dosage calculation provides mainly or as whole the control signal/s for the dosing devices. The adjustment is more like fine tuning of the dosage/s if needed and may provide faster responses in cases where the measurements indicates that the dosage/s should be changed. Since there can be several measuring units, algorithms capable to handle many variables are preferred, like linguistic equations, neural network, fuzzy logic etc. Further the control system can be arranged to utilize feedforward and/or feedback measurements and other algorithms like P, PI, PID etc. The control unit can be performed as software, hardware or their combination. Hardware implementation can be based on printed circuits.

As can be noted, the design of the wastewater treatment plant depends on the water quality, the treatment requirements, space available, flow, etc, and therefore to the control system as well. In some embodiments, for example, the wastewater treatment plant may further include a tertiary treatment process for improved phosphorus removal. Also other additional processes may be included.

The inventive control can be used on different levels depending on what is measured on the plant. With more on-line analyzers available, the accuracy of the control is improved and also more parameters can be controlled. The inventive control controls the chemical supported separation to the right level. If chemicals are over-dosed, there is a risk that the biological treatment is disturbed, if dosing too little more energy than needed is consumed and less biogas than possible is produced. The algorithm sets the right level of the treatment at any occasion.

The inventive embodiment can be made in several ways. The examples illustrated above are some possible embodiments, but there can be other embodiments as well. The chemical or chemicals dosed prior to the primary treatment, or into an influent of the primary treatment process or into the primary treatment process can be inorganic or organic. One or more coagulants can be used, or one or more polymers can be used, or any combination of them can be used. Other chemicals can also be used like acid or base for controlling pH.

At least one dosing device is used to feed the chemical/s from a tank/storage, or tanks/storages, prior to or into the influent of the primary treatment process or into the primary treatment process. A dosing device can be a chemical specific pump or a dosing device suitable for non-liquid chemicals, or it can be device suitable for feeding several chemicals. Therefore, a number of dosing devices can be any between one and a number of the chemicals used. The tanks/storage are chemical specific. So, thedosing devices and the tanks/storages can be used for any combination of chemicals.

Further, the embodiments illustrated above show examples of different measurement arrangements. However, there can also be other measuring units in these examples or in other examples not shown in this description. The further measuring units can give more data from the wastewater treatment plant, which makes it possible to achieve even more accurate dosing of the chemical/s.

It is evident from the above that the invention is not limited to the embodiments described in this text but can be implemented in many other different embodiments within the scope of the independent claims.

## Claims

1. A control system for a wastewater treatment plant, the wastewater treatment comprising at least a primary sedimentation tank to perform a primary treatment process (3), to remove solid material, and means for a secondary treatment process (4) being a biological process comprising a denitrification zone , **characterised in that** the control system comprises a measuring unit (12) that is arrangeable to measure turbidity or suspended solids of the wastewater before or in the primary treatment process, and a second measuring unit (13) that is arrangeable to measure a nitrate level or a redox value in the denitrification zone of the secondary treatment process,
and a control unit (14) that is arranged to receive measurements, from the measuring unit (12) to form control signals for dosing at least one chemical prior to the primary treatment (3) or into an influent of the primary treatment process (3), or into the primary treatment process (3), taking into account wastewater condition based on the measurements from the measuring unit (12) to reduce suspended solids in the primary process,
the control unit (14) being also arranged to receive measurements from the second measuring unit (13), and to adjust said control signals for dosing based on the measurements from the second measuring unit (13) to control load of organic matter to the secondary process,
wherein if the nitrate level or redox value measured by the second measuring unit (13) is too high, the adjustment increases the value of the control signal for higher dosage of chemicals, and if the nitrate level or redox value is too low, the adjustment decreases the value of the control signals for lower dosage of chemicals. ,

2. A control system according to claim 1, **characterised in that** the control unit (14) is arranged to dose at least two chemicals.

3. A control system according to claim 1 or 2, **characterised in that** the control unit (14) is arranged to dose coagulant, or polymer, or any combination of them, optionally together with another chemical.

4. A control system according to any of claims 1 - 3, **characterised in that** it further comprises a third measuring unit (20, 21) that is arranged to measure a phosphorus level in an effluent of the secondary treatment process, or in an effluent of the primary treatment process, and the control unit (14A) is further arranged to
receive measurements from the third measuring unit (20, 21), and use these measurements when forming control signals for dosing at least one chemical prior to the primary treatment (3) or into an influent of the primary treatment process (3), or into the primary treatment process (3).

5. A control system according to claim 4, **characterised in that** the control unit (14A) is arranged to dose at least two chemicals, the two chemicals being coagulant, or polymer, or any combination of them, optionally together with another chemical, the polymer dosing utilizing the measurements from the measuring unit (12), and the coagulant dosing utilizing measurements from the third measuring unit (20, 21) or measurements from the third measuring unit (20, 21) and the measurements from the second measuring unit (13).

6. A control system according to claim 4 or 5, **characterised in that** the control unit is arranged to set threshold values for maximum and minimum dosage/s based on phosphorus level in an effluent of the secondary treatment process.

7. A control system according to any of claim 1 - 6, **characterised in that** it further comprises a fourth measuring unit (22) that is arranged to measure a suspended solid or turbidity level in an effluent of the primary treatment process, or a fifth measuring unit (23) that is arranged to measure a COD or BOD or TOC values in an effluent of the primary treatment process, or the both fourth measuring unit (22) and fifth measuring unit (23),
and the control unit (14B) is further arranged to receive measurements (221, 231) from fourth measuring unit (22) or the fifth measuring unit (23), or the both fourth measuring unit (22) and fifth measuring unit (23),
and also arranged to use these measurements when forming control signals for dosing at least one chemical prior to the primary treatment (3) or into an influent of the primary treatment process (3), or into the primary treatment process (3), and for adjusting said dosing.

8. A control system according to claim 4, **characterised in that**
the control unit (14A) is arranged to dose at least two chemicals, the two chemicals being coagulant, or polymer, or any combination of them, optionally together with another chemical, the polymer dosing utilizing at least the measurements from the second measuring unit (13), and the coagulant dosing utilizing measurements from the third measuring unit (20, 21).

9. A control system according to any of claim 1 - 9, **characterised in that** it further comprises a sixth measuring unit (25) that is arranged to measure an ammonium nitrogen level in an effluent of the primary treatment process
and the control unit (14B) is further arranged to receive measurements (251) from the sixth measuring unit (25), and also arranged to use these measurements when forming control signals for dosing at least one chemical prior to the primary treatment (3) or into an influent of the primary treatment process (3) or into the primary treatment process (3), and for adjusting said dosing.

10. A control system according to any of claim 1 - 10, **characterised in that** it further comprises a seventh measuring unit (24) that is arranged to measure an ammonium level in an aeration zone of the secondary treatment process
and the control unit (14B) is further arranged to receive measurements (241) from the seventh measuring unit (24), and also arranged to use these measurements when forming control signals for dosing at least one chemical prior to the primary treatment (3) or into an influent of the primary treatment process (3) or into the primary treatment process (3), and for adjusting said dosing.

11. A control system according to any of claim 4 - 11, **characterised in that** it further comprises at least one further measuring unit
and the control unit (14, 14A, 14B) is further arranged to receive measurements from at least one further measuring unit, and also arranged to use these measurements when forming control signals for dosing at least one chemical prior to the primary treatment (3) or into an influent of the primary treatment process (3) or into the primary treatment process (3), and for adjusting said dosing.

12. A control system according to any of claim 1 - 12, **characterised in that** the control system comprises also a flow meter (11) that is arranged to measure a wastewater flow (1) into the wastewater treatment plant,
and a control unit (14, 14A, 14B) that is arranged to receive measurements also from the flow meter (11), and also arranged to form control signals for dosing at least one chemical prior to the primary treatment (3) or into an influent of the primary treatment process (3) or into the primary treatment process (3), utilizing also the measurements from the flow meter (11).

## Patentansprüche

1. Steuersystem für eine Abwasseraufbereitungsanlage, wobei die Abwasseraufbereitung mindestens ein primäres Absetzbecken zur Durchführung eines primären Aufbereitungsprozesses (3), um Feststoffe zu entfernen, und Mittel für einen sekundären Aufbereitungsprozess (4) umfasst, der ein biologischer Prozess ist, der eine Denitrifikationszone umfasst, **dadurch gekennzeichnet, dass** das Steuersystem eine Messeinheit (12) umfasst, die so angeordent ist, dass sie die Trübung oder die suspendierten Feststoffe des Abwassers vor oder in dem primären Behandlungsprozess misst, und eine zweite Messeinheit (13), die so angeordnet ist, dass sie einen Nitratpegel oder einen Redoxwert in der Denitrifikationszone des sekundären Behandlungsprozesses misst,
und eine Steuereinheit (14), die angeordnet ist, um Messungen von der Messeinheit (12) zu empfangen, um Steuersignale für die Dosierung mindestens einer Chemikalie vor der Primärbehandlung (3) oder in einen Zufluss des Primärbehandlungsprozesses (3) oder in den Primärbehandlungsprozess (3) zu bilden, wobei der Abwasserzustand basierend auf den Messungen von der Messeinheit (12) berücksichtigt wird, um suspendierte Feststoffe im Primärprozess zu reduzieren,
die Steuereinheit (14) auch angeordnet ist, um Messungen von der zweiten Messeinheit (13) zu empfangen und die Steuersignale für die Dosierung basierend auf den Messungen von der zweiten Messeinheit (13) einzustellen, um die Belastung des Sekundärprozesses mit organischem Material zu steuern,
wobei, wenn der von der zweiten Messeinheit (13) gemessene Nitratwert oder Redoxwert zu hoch ist, die Einstellung den Wert des Steuersignals für eine höhere Dosierung von Chemikalien erhöht, und wenn der Nitratwert oder Redoxwert zu niedrig ist, die Einstellung den Wert der Steuersignale für eine niedrigere Dosierung von Chemikalien verringert.

2. Steuersystem nach Anspruch 1, **dadurch gekennzeichnet, dass** die Steuereinheit (14) zur Dosierung von mindestens zwei Chemikalien angeordnet ist.

3. Steuersystem nach Anspruch 1 oder 2, **dadurch gekennzeichnet, dass** die Steuereinheit (14) angeordnet ist, um Koagulans oder Polymer oder eine beliebige Kombination davon, optional zusammen mit einer anderen Chemikalie, zu dosieren.

4. Steuersystem nach einem der Ansprüche 1 bis 3, **dadurch gekennzeichnet, dass** es ferner eine dritte Messeinheit (20, 21) umfasst, die angeordnet ist, um einen Phosphorgehalt in einem Abfluss des sekundären Behandlungsprozesses oder in einem Abfluss des primären Behandlungsprozesses zu messen, und die Steuereinheit (14A) ferner angeordnet ist zum
Empfangen von Messungen von der dritten Messeinheit (20, 21) und Verwenden dieser Messungen bei der Bildung von Steuersignalen zur Dosierung mindestens einer Chemikalie vor der Primärbehandlung (3) oder in einen Zufluss des Primärbehandlungsprozesses (3) oder in den Primärbehandlungsprozess (3).

5. Steuersystem nach Anspruch 4, **dadurch gekennzeichnet, dass** die Steuereinheit (14A) angeordnet ist, um mindestens zwei Chemikalien zu dosieren, wobei es sich bei den beiden Chemikalien um ein Koagulationsmittel oder ein Polymer oder eine beliebige Kombination davon handelt, optional zusammen mit einer anderen Chemikalie, wobei die Polymerdosierung die Messungen der Messeinheit (12) verwendet und die Koagulationsmitteldosierung die Messungen der dritten Messeinheit (20, 21) oder die Messungen der dritten Messeinheit (20, 21) und die Messungen der zweiten Messeinheit (13) verwendet.

6. Steuersystem nach Anspruch 4 oder 5, **dadurch gekennzeichnet, dass** die Steuereinheit angeordnet ist, um Schwellenwerte für die maximale und minimale(n) Dosierung(en) basierend auf dem Phosphorgehalt in einem Abfluss des sekundären Behandlungsprozesses zu steuern.

7. Steuersystem nach einem der Ansprüche 1 bis 6, **dadurch gekennzeichnet, dass** es ferner eine vierte Messeinheit (22) umfasst, die angeordnet ist, um einen Schwebstoff- oder Trübungspegel in einem Abfluss des primären Behandlungsprozesses zu messen, oder eine fünfte Messeinheit (23), die angeordnet ist, um einen CSB- oder BSB- oder TOC-Wert in einem Abfluss des primären Behandlungsprozesses zu messen, oder sowohl die vierte Messeinheit (22) als auch die fünfte Messeinheit (23), und die Steuereinheit (14B) ferner angeordnet ist, um Messungen (221, 231) von der vierten Messeinheit (22) oder der fünften Messeinheit (23), oder sowohl der vierten Messeinheit (22) als auch der fünften Messeinheit (23) zu empfangen,
und auch angeordnet, um diese Messungen bei der Bildung von Steuersignalen für die Dosierung von mindestens einer Chemikalie vor der primären Behandlung (3) oder in einen Zufluss des primären Behandlungsprozesses (3) oder in den primären Behandlungsprozess (3) zu verwenden, und um die Dosierung einzustellen.

8. Steuersystem nach Anspruch 4, **dadurch gekennzeichnet, dass**
die Steuereinheit (14A) angeordnet ist, um mindestens zwei Chemikalien zu dosieren, wobei es sich bei den beiden Chemikalien um ein Koagulationsmittel oder ein Polymer oder eine beliebige Kombination davon handelt, optional zusammen mit einer anderen Chemikalie, wobei die Polymerdosierung mindestens die Messungen der zweiten Messeinheit (13) verwendet und die Koagulationsmitteldosierung die Messungen der dritten Messeinheit (20, 21) verwendet.

9. Steuersystem nach einem der Ansprüche 1 bis 9, **dadurch gekennzeichnet, dass** es ferner eine sechste Messeinheit (25) umfasst, die angeordnet ist, um einen Ammoniumstickstoffpegel in einem Abfluss des primären Behandlungsprozesses zu messen,
aund die Steuereinheit (14B) ferner angeordnet ist, um Messungen (251) von der sechsten Messeinheit (25) zu empfangen, und auch angeordnet ist, um diese Messungen zu verwenden, wenn sie Steuersignale zur Dosierung mindestens einer Chemikalie vor der primären Behandlung (3) oder in einen Zufluss des primären Behandlungsprozesses (3) oder in den primären Behandlungsprozess (3) bildet, und um die Dosierung anzupassen.

10. Steuersystem nach einem der Ansprüche 1 bis 10, **dadurch gekennzeichnet, dass** es ferner eine siebte Messeinheit (24) umfasst, die angeordnet ist, um einen Ammoniumpegel in einer Belüftungszone des sekundären Behandlungsprozesses zu messen,
und die Steuereinheit (14B) ferner angeordnet ist, um Messungen (241) von der siebten Messeinheit (24) zu empfangen, und auch angeordnet ist, um diese Messungen zu verwenden, wenn sie Steuersignale zur Dosierung mindestens einer Chemikalie vor der primären Aufbereitung (3) oder in einen Zufluss des primären Aufbereitungsprozesses (3) oder in den primären Aufbereitungsprozess (3) bildet, und um die Dosierung anzupassen.

11. Steuersystem nach einem der Ansprüche 4 bis 11, **dadurch gekennzeichnet, dass** es ferner mindestens eine weitere Messeinheit umfasst
und die Steuereinheit (14, 14A, 14B) ferner angeordnet ist, um Messungen von mindestens einer weiteren Messeinheit zu empfangen, und auch angeordnet ist, um diese Messungen zu verwenden, wenn sie Steuersignale zur Dosierung mindestens einer Chemikalie vor der primären Behandlung (3) oder in einen Zufluss des primären Behandlungsprozesses (3) oder in den primären Behandlungsprozess (3) bildet, und um die Dosierung einzustellen.

12. Steuersystem nach einem der Ansprüche 1 bis 12, **dadurch gekennzeichnet, dass** das Steuersystem auch einen Durchflussmesser (11) umfasst, der angeordnet ist, um einen Abwasserstrom (1) in die Wasseraufbereitungsanlage zu messen,
und eine Steuereinheit (14, 14A, 14B), die angeordnet ist, um Messungen auch von dem Durchflussmesser (11) zu empfangen, und auch angeordnet ist, um Steuersignale für die Dosierung mindestens einer Chemikalie vor der primären Behandlung (3) oder in einen Zufluss des primären Behandlungsprozesses (3) oder in den primären Behandlungsprozess (3) zu bilden, wobei sie auch die Messungen von dem Durchflussmesser (11) verwendet.

## Revendications

1. Système de commande pour une installation de traitement des eaux usées, le traitement des eaux usées comprenant au moins un bassin de sédimentation principal pour réaliser un processus de traitement principal (3), pour éliminer des matières solides, et des moyens pour un processus de traitement secondaire (4) étant un processus biologique comprenant une zone de dénitrification, **caractérisé en ce que** le système de commande comprend une unité de mesure (12) qui peut être agencée pour mesurer la turbidité ou les matières en suspension des eaux usées avant ou pendant le processus de traitement principal, et une deuxième unité de mesure (13) qui peut être agencée pour mesurer un niveau de nitrate ou une valeur redox dans la zone de dénitrification du processus de traitement secondaire, et une unité de commande (14) qui est agencée pour recevoir des mesures, à partir de l'unité de mesure (12) pour former des signaux de commande pour le dosage d'au moins un produit chimique avant le traitement principal (3) ou dans un effluent du processus de traitement principal (3), ou dans le processus de traitement principal (3), en tenant compte de l'état des eaux usées sur la base des mesures provenant de l'unité de mesure (12) pour réduire les matières en suspension dans le processus principal,
l'unité de commande (14) étant également agencée pour recevoir des mesures à partir de la deuxième unité de mesure (13), et pour ajuster lesdits signaux de commande pour le dosage sur la base des mesures provenant de la deuxième unité de mesure (13) pour commander la charge de matière organique du processus secondaire,
dans lequel si le niveau de nitrate ou la valeur redox mesuré par la deuxième unité de mesure (13) est trop élevé, le réglage augmente la valeur du signal de commande pour un dosage plus élevé de produits chimiques, et si le niveau de nitrate ou la valeur redox est trop faible, le réglage diminue la valeur des signaux de commande pour un dosage plus faible de produits chimiques.

2. Système de commande selon la revendication 1, **caractérisé en ce que** l'unité de commande (14) est agencée pour doser au moins deux produits chimiques.

3. Système de commande selon la revendication 1 ou 2, **caractérisé en ce que** l'unité de commande (14) est agencée pour doser un coagulant, ou un polymère, ou une quelconque combinaison de ceux-ci, éventuellement avec un autre produit chimique.

4. Système de commande selon l'une quelconque des revendications 1 à 3, **caractérisé en ce qu'**il comprend également une troisième unité de mesure (20, 21) qui est agencée pour mesurer un niveau de phosphore dans un effluent du processus de traitement secondaire, ou dans un effluent du processus de traitement principal, et que l'unité de commande (14A) est également agencée pour recevoir des mesures provenant de la troisième unité de mesure (20, 21), et utiliser ces mesures lors de la formation de signaux de commande pour le dosage d'au moins un produit chimique avant le traitement principal (3) ou dans un effluent du processus de traitement principal (3), ou dans le processus de traitement principal (3).

5. Système de commande selon la revendication 4, **caractérisé en ce que** l'unité de commande (14A) est agencée pour doser au moins deux produits chimiques, les deux produits chimiques étant un coagulant, ou un polymère, ou une quelconque combinaison de ceux-ci, éventuellement avec un autre produit chimique, le dosage du polymère utilisant les mesures de l'unité de mesure (12), et le dosage du coagulant utilisant les mesures de la troisième unité de mesure (20, 21) ou les mesures de la troisième unité de mesure (20, 21) et les mesures de la deuxième unité de mesure (13).

6. Système de commande selon la revendication 4 ou 5, **caractérisé en ce que** l'unité de commande est agencée pour définir des valeurs seuils pour le dosage maximal et minimal sur la base du niveau de phosphore dans un effluent du processus de traitement secondaire.

7. Système de commande selon l'une quelconque des revendications 1 à 6, **caractérisé en ce qu'**il comprend également une quatrième unité de mesure (22) qui est agencée pour mesurer un niveau de matières en suspension ou de turbidité dans un effluent du processus de traitement principal, ou une cinquième unité de mesure (23) agencée pour mesurer les valeurs d'un COD ou BOD ou TOC dans un effluent du processus de traitement principal, ou les deux quatrième unité de mesure (22) et cinquième unité de mesure (23),
et l'unité de commande (14B) est également agencée pour recevoir des mesures (221, 231) à partir de la quatrième unité de mesure (22) ou de la cinquième unité de mesure (23), ou des deux quatrième unité de mesure (22) et cinquième unité de mesure (23),
et aussi agencée pour utiliser ces mesures lors de la formation de signaux de commande pour le dosage d'au moins un produit chimique avant le traitement principal (3) ou dans un effluent du processus de traitement principal (3), ou dans le processus de traitement principal (3), et pour ajuster ledit dosage.

8. Système de commande selon la revendication 4, **caractérisé en ce que**
l'unité de commande (14A) est agencée pour doser au moins deux produits chimiques, les deux produits chimiques étant un coagulant, ou un polymère, ou une quelconque combinaison de ceux-ci, éventuellement avec un autre produit chimique, le dosage du polymère utilisant au moins les mesures provenant de la deuxième unité de mesure (13), et le dosage du coagulant utilisant les mesures de la troisième unité de mesure (20, 21).

9. Système de commande selon l'une quelconque des revendications 1 à 9, **caractérisé en ce qu'**il comprend également une sixième unité de mesure (25) qui est agencée pour mesurer un niveau d'azote ammoniacal dans un effluent du processus de traitement principal et l'unité de commande (14B) est également agencée pour recevoir des mesures (251) provenant de la sixième unité de mesure (25), et aussi agencée pour utiliser ces mesures lors de la formation de signaux de commande pour le dosage d'au moins un produit chimique avant le traitement principal (3) ou dans un effluent du processus de traitement principal (3) ou dans le processus de traitement principal (3), et pour ajuster ledit dosage.

10. Système de commande selon l'une quelconque des revendications 1 à 10, **caractérisé en ce qu'**il comprend également une septième unité de mesure (24) qui est agencée pour mesurer un niveau d'ammonium dans une zone d'aération du processus de traitement secondaire et l'unité de commande (14B) est également agencée pour recevoir des mesures (241) à partir de la septième unité de mesure (24), et aussi agencée pour utiliser ces mesures lors de la formation de signaux de commande pour le dosage d'au moins un produit chimique avant le traitement principal (3) ou dans un effluent du processus de traitement principal (3) ou dans le processus de traitement principal (3), et pour ajuster ledit dosage.

11. Système de commande selon l'une quelconque des revendications 4 à 11, **caractérisé en ce qu'**il comprend également au moins une unité de mesure supplémentaire et l'unité de commande (14,14A, 14B) est également agencée pour recevoir des mesures à partir d'au moins une unité de mesure supplémentaire, et aussi agencée pour utiliser ces mesures lors de la formation de signaux de commande pour le dosage d'au moins un produit chimique avant le traitement principal (3) ou dans un effluent du processus de traitement principal (3) ou dans le processus de traitement principal (3), et pour ajuster ledit dosage.

12. Système de commande selon l'une quelconque de la revendication 1 à 12, **caractérisé en ce que** le système de commande comprend également un débitmètre (11) qui est agencé pour mesurer un débit d'eaux usées (1) entrant dans l'installation de traitement des eaux usées,
et une unité de commande (14, 14A, 14B) qui est agencée pour aussi recevoir des mesures à partir du débitmètre (11), et aussi agencée pour former des signaux de commande pour le dosage d'au moins un produit chimique avant le traitement principal (3) ou dans un effluent du processus de traitement principal (3) ou dans le processus de traitement principal (3), utilisant également les mesures provenant du débitmètre (11).
